# EUROPEAN PATENT SPECIFICATION

(11) **EP 1 887 572 B1**
(45) Date of publication and mention of the grant of the patent: **08.07.2009**
(21) Application number: 07015364.8
(22) Date of filing: 06.08.2007
(51) Int. Cl.: G11B 7/135, G02B 26/08

(54) **Manufacturing method for variable shape mirror**
Verfahren zur Herstellung von Spiegeln mit variabler Form
Procédé de fabrication pour miroir de forme variable

(30) Priority: 09.08.2006 JP 2006216672
(43) Date of publication of application: 13.02.2008
(73) Proprietor: Funai Electric Co., Ltd., Daito-shi Osaka 574-0013 (JP)
(72) Inventor: Maeda, Shigeo, Daito-shi Osaka 574-0013 (JP); Tanaka, Katsuhiko, Kusatsu Shiga, 525-8577 (JP); Ishii, Akira, Kusatsu Shiga, 525-8577 (JP); Sugiyama, Susumu, Kusatsu Shiga, 525-8577 (JP)
(74) Representative: Beetz & Partner

(56) References cited:
- US-A- 3 904 274
- US-A- 4 655 563

## Description

### BACKGROUND OF THE INVENTION

### Field of the Invention

The present invention relates to a manufacturing method for a variable shape mirror that is mounted on an optical pickup device.

### Description of Related Art

Conventionally, a compact discs (CD) and a digital versatile disc (DVD) are available in the market as an optical recording medium for recording information such as images and sounds. Further, in recent years, a next-generation DVD are being commercialized, which uses a laser beam of violet color having a short wavelength for realizing higher density recording. In order to use such an optical disc, an optical disc apparatus is necessary as a driving apparatus. The optical disc apparatus drives the optical disc to rotate and leads the laser beam onto a recording surface of the optical disc, so that information is recorded or erased and that information is reproduced based on reflection light from the recording surface. Further, in order to realize such a function, the optical disc apparatus is equipped with an optical pickup device as a set of units for emitting the laser beam, leading the laser beam onto the recording surface of the optical disc to form a beam spot, and receiving reflection light from the recording surface of the optical disc.

Here, optical pickup devices, particularly next-generation DVDs are adapted to a high numerical aperture (NA) in accordance with a standard to conform. In this case, influence of the spherical aberration that is generated when a thickness of the optical disc varies slightly becomes conspicuous so that a minute beam spot may not be obtained. Therefore, jitter of a reproduced signal is deteriorated, and recording peak power is lowered, so that recording and reproducing quality is lessened as a result.

In addition, the optical axis of the laser beam may be inclined slightly with respect to the recording surface resulting from warpage or the like of the optical disc. In this case, the optical path of the laser beam is bent so that coma aberration is generated, which makes it difficult to condense the laser beam into an appropriate spot diameter. As a result, recording and reproducing quality is deteriorated. There are other factors of deterioration of recording and reproducing quality, which includes positioning accuracy of an optical system such as an optical lens or a beam splitter that is an element of the optical pickup device, which causes astigmatic aberration.

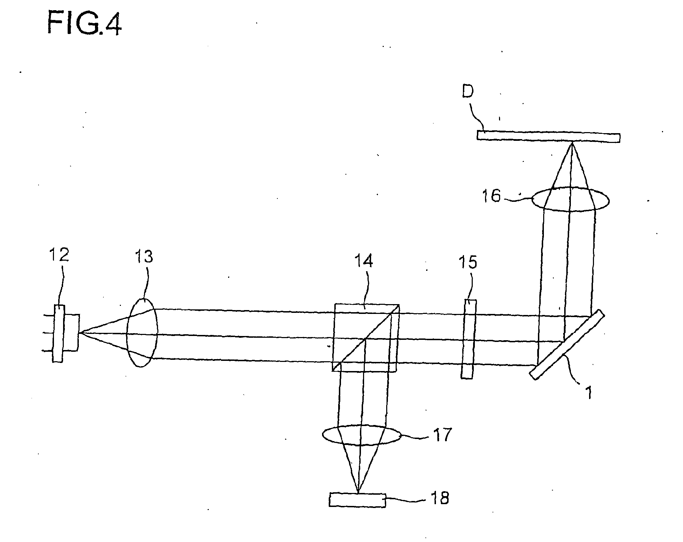

In order to prevent the above-mentioned situation, there is proposed a variable shape mirror that can correct wave aberration such as the spherical aberration. For example, as shown in Fig. 4, the optical pickup device adopting a variable shape mirror 1 in the optical system is made up of a semiconductor laser 12, a collimator lens 13, a beam splitter 14, the variable shape mirror 1, a quarter wave length plate 15, an objective lens 16, a condensing lens 17, a photo detector 18 and the like. A laser beam emitted from the semiconductor laser 12 is made into parallel rays by the collimator lens 13, passes through the beam splitter 14, is reflected by the variable shape mirror 1 after its polarized state is changed by the quarter wave length plate 15, and is condensed by the objective lens 16 so as to reach the recording surface of the optical disc D. Further, the laser beam reflected by the recording surface of the optical disc D passes through the objective lens 16, is reflected by the variable shape mirror 1, passes through the quarter wave length plate 15, then is reflected by the beam splitter 14 this time, and is condensed by the condensing lens 17 so as to reach the photo detector 18 at last.

The variable shape mirror 1 has a function of a so-called rise up mirror that reflects the laser beam toward the optical disc D and reflects the reflection light from the optical disc D in parallel with the optical disc D. It also has a function of changing its reflection plane if necessary for fine adjustment of a reflection angle of the laser beam, so that wave aberration is corrected. In this case, based on a signal obtained by the photo detector 18, if it is necessary to correct wave aberration, a control portion that is provided to the optical pickup device sends a signal to the variable shape mirror 1 so that a shape of the reflection plane is changed for correcting the aberration.

As to the variable shape mirror 1, there is a type that utilizes characteristics of a piezoelectric element made of a piezoelectric material (see JP-A-2004-109769 and JP-A-2004-226457, for example). This variable shape mirror 1 is generally made up of a support substrate, a mirror substrate that is supported by a support pillar and is opposed to the support substrate, and a piezoelectric element sandwiched between the support substrate and the mirror substrate. The outer surface of the mirror substrate is provided with a reflection film to be a reflection plane for the laser beam. When a predetermined voltage is applied to the piezoelectric element so that an electric field is applied, the piezoelectric element is expanded or contracted between the support substrate and the mirror substrate. The mirror substrate is deformed elastically in accordance with the expansion or the contraction, the reflection film, i.e., the reflection plane is deformed following the deformation of the mirror substrate.

Under the present circumstances, a manufacturing method for such a variable shape mirror that is suitable for mass production is not established yet. For example, in the current situation, the support substrate and the mirror substrate that constitute each variable shape mirror are cut from the wafers, and the support pillar and the piezoelectric element are sandwiched between the support substrate and the mirror substrate. Then, the both wafers and the support pillar, as well as the both wafers and the piezoelectric element are bonded to each other, individually. In this case, first, a plate jig with through holes at positions where the support pillar and the piezoelectric element are disposed is placed on the support substrate, and the support pillar and the piezoelectric element are inserted in the through holes of the jig. In this state, the support substrate and the support pillar, as well as the support substrate and the piezoelectric element are bonded to each other. After removing the jig, the mirror substrate is placed on the support pillar and the piezoelectric element, and further the mirror substrate and the support pillar, as well as the mirror substrate and the piezoelectric element are bonded to each other. Then, the reflection film is formed on the outer surface of the mirror substrate. Thus, the variable shape mirror can be obtained at least.

However, according to this method, the piezoelectric element and the support pillar are bonded to the support substrate and the mirror substrate, respectively and separately. It is because if they are bonded at the same time, the jig cannot be removed. Since this method requires two bonding steps, it is not efficient and is not suitable for mass production.

Variable shape mirrors are well known from the prior art and are not only used for wave aberration correction of reflection light from the recording surface of an optical disc, but also for the correction of aberrations in wave fronts coming from astronomical objects.

For instance, US4655563 reflecting the preamble of claim 1 discloses a lightweight deformable mirror suitable for space applications in which a plurality of electrically-operated electrodistortive actuators can be used to selectively deform the mirror's reflecting surface and the actuators are sandwiched between a pair of thin sheets of glass with the surface of one sheet finished to form the mirrors's reflecting surface. By selectively energizing one or more of the actuators, the mirror surface can be deformed to correct aberrations in optical wave fronts impinging on the mirror or to encode signals into wave fronts projected onto the mirror surface. Electrical connections to the actuators may be made through printed circuit connections which are contained on the bottom sheet of the deformable mirror. Since the bottom sheet is permitted to flex along with the top sheet containing the reflecting surface in response to forces imparted thereto when the actuators are energized, a lightweight, thin sheet of glass can be used for the bottom sheet, thereby reducing the mirror's overall weight. In one embodiment, three pairs of kinematic mounts support the deformable mirror and may be used to change the orientation of the mirror's reflecting surface. In an alternate preferred embodiment, gross changes in the shape of the mirror's reflecting surface may be made by operating control actuators which are fastened between the deformable mirror and the surface on which the mirror is mounted.

Also in US3904274 a wave front phase modulator is disclosed which is formed from a monolithic piezoelectric medium which undergoes dimensional changes in response to an electric field impressed there across. A thin metallized sheet is cemented to one surface of the piezoelectric medium to provide a mirror surface. Means are provided to produce a plurality of discretely electrically addressable locations on the piezoelectric medium. Such means include a series of segmented electrodes and/ or saw cuts or drilled holes. Means are also provided for addressing each of the discrete locations with a variable strength voltage in order to cause the piezoelectric medium to undergo controlled and continuous surface deformations. These surface deformations are calculated to provide distortion correction for wave fronts reflected from the mirror surface of the modulator.

### SUMMARY OF THE INVENTION

In view of the above described problem it is an object of the present invention to provide a manufacturing method for variable shape mirrors, which is suitable for mass production.

To attain the above described object, a manufacturing method for variable shape mirrors having the features of claim 1 is proposed.

According to this structure, bonding of the piezoelectric element and the support pillar can be performed not separately to the support substrate and the mirror substrate but simultaneously, so the variable shape mirror can be produced efficiently.

In a manufacturing method in accordance with the present invention it is preferable that a thin metal layer is disposed at the bonding portion between the support substrate and the support pillar, the bonding portion between the support substrate and the piezoelectric element, the bonding portion between the mirror substrate and the support pillar, and the bonding portion between the mirror substrate and the piezoelectric element, and they are pressed to each other while they are heated to be bonded.

In a manufacturing method in accordance with the present invention it is preferable that a thermal expansion coefficient of the jig is the same as that of the support substrate.

According to the manufacturing method for variable shape mirrors of the present invention, variable shape mirrors can be produced efficiently, and the method is sufficiently suitable for mass production.

### BRIEF DESCRIPTION OF THE DRAWINGS

Figs. 1A and 1B are cross sectional views of a variable shape mirror that is manufactured by a manufacturing method according to an embodiment of the present invention.
Fig. 2 is an exploded perspective view of the variable shape mirror to show its general structure.
Fig. 3A-3E are perspective views of the variable shape mirror to show a procedure of the manufacturing method for variable shape mirrors according to an embodiment of the present invention.
Fig. 4 is a plan view to show a general structure of an optical pickup device that adopts a variable shape mirror.

### DETAILED DESCRIPTION OF THE PREFERRED EMBODIMENTS

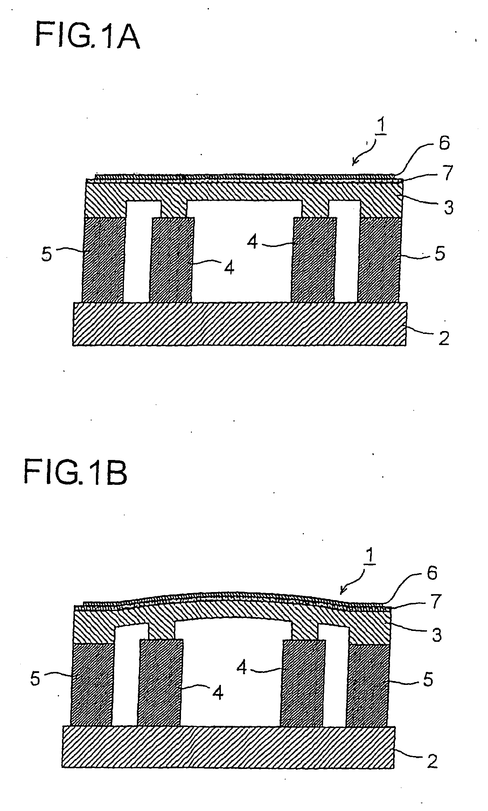

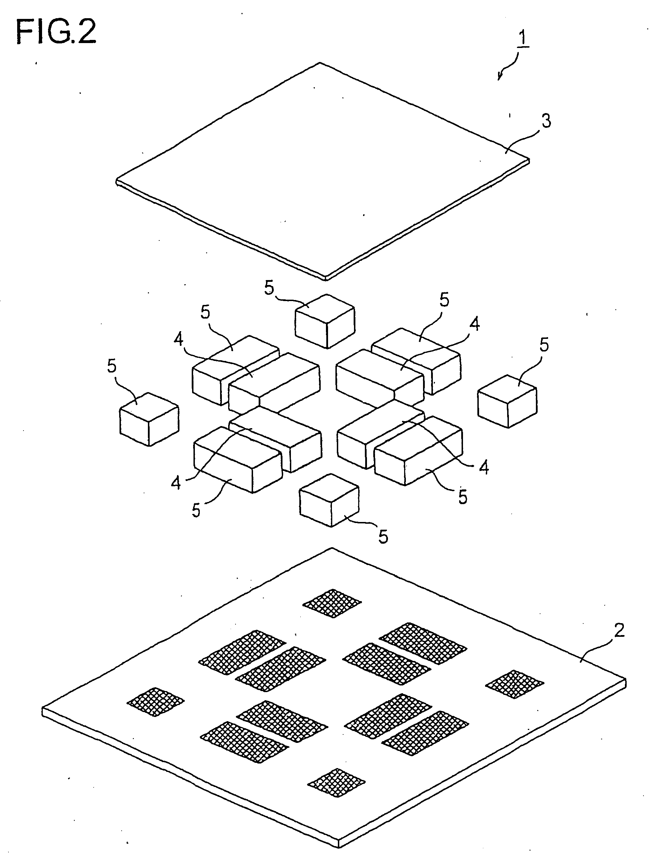

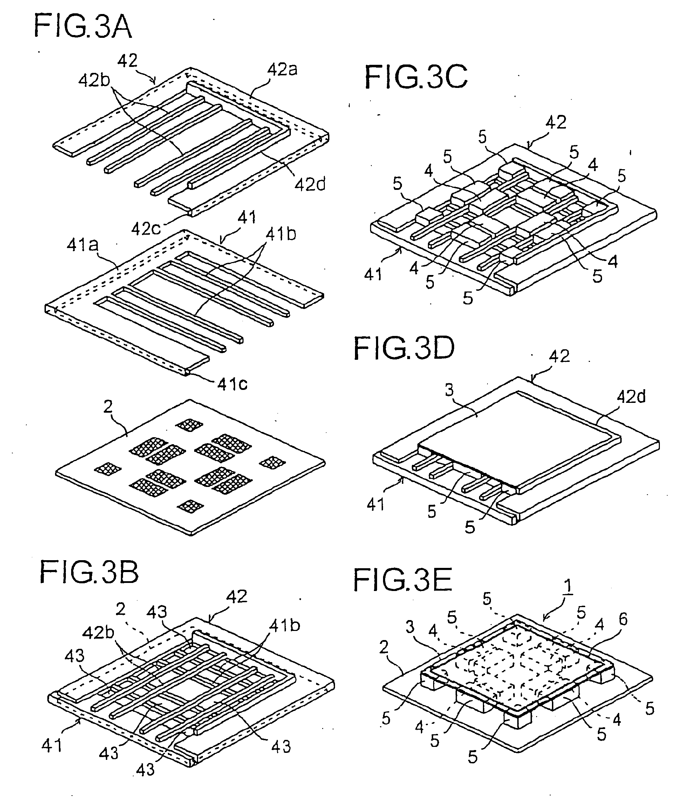

Hereinafter, an embodiment of the present invention will be described in detail with reference to the attached drawings. Figs. 1A and 1B are cross sectional views of a variable shape mirror that is manufactured by a manufacturing method according to an embodiment of the present invention. Fig. 1A shows an undriven state, while Fig. 1B shows a driven state. Fig. 2 is a an exploded perspective view of the variable shape mirror to show its general structure and Fig. 3A-3E are perspective views of the variable shape mirror to show a procedure of the manufacturing method for variable shape mirrors according to an embodiment of the present invention.

First, a variable shape mirror 1 will be described. As shown in Figs. 1A and 2, the variable shape mirror 1 in the present embodiment includes a support substrate 2 having a substantially square shape, a mirror substrate 3 that has a substantially square shape of a little smaller size than the support substrate 2 and is opposed to the support substrate 2, a plurality of piezoelectric elements 4 and a plurality of support pillars 5 that are sandwiched between the support substrate 2 and the mirror substrate 3 at predetermined positions. The variable shape mirror 1 of this embodiment includes the support pillars 5 disposed at four corners and at substantially centers of four sides of the mirror substrate 3 as shown in Fig. 2, and the piezoelectric elements 4 are disposed inside the support pillars 5 disposed at four sides with a predetermined space. In other words, the piezoelectric elements 4 and the support pillars 5 are disposed in this order outward from the center of the mirror substrate 3 in the cross direction.

The support substrate 2 is a base for supporting individual components. As a material of the support substrate 2, glass can be used. However, other materials as long as having insulation characteristics, such as ceramics, can also be used. This support substrate 2 is provided with a thin film portion made of silicon (Si) that is formed on the surface facing the mirror substrate 3 (i.e., the inner surface) at the positions where the piezoelectric elements 4 and the support pillars 5 are disposed (hatched portions in Fig. 2). In particular, a wiring pattern (not shown) made of the same Si is lead out to a vicinity to the edge of the support substrate 2 from the Si thin film portion of the position where the piezoelectric element 4 are disposed. Note that the Si thin film portions and the Si wiring patterns are formed by photo lithography or the like.

The mirror substrate 3 is a plate that is capable of being deformed in an elastic manner. As a material of it, Si can be used. However, glass or the like, for example, can also be used as long as it can be deformed in an elastic manner. This mirror substrate 3 is provided with a reflection film 6 that has a function as a reflection plane that is formed on the substantially entire surface (outer surface) opposite to the surface (inner surface) facing the support substrate 2. The reflection film 6 is a metal film made of aluminum (Al) or the like, which is formed by vapor deposition or sputtering or the like.

The piezoelectric element 4 is formed in a rectangular solid shape made of a piezoelectric material that is expanded or contracted when an electric field is applied. As the material, PZT (Pb(Zr,Ti)O3, lead zirconate titanate) can be used. However, it can be other piezoelectric ceramics except the PZT or piezoelectric polymer such as a polyvinylidene fluoride or the like. Note that the shape of the piezoelectric element 4 can be a cylindrical shape or a rectangular column shape.

Each of the piezoelectric elements 4 is bonded onto the Si thin film portion formed on the inner surface of the support substrate 2 via a metal thin layer portion (not shown). As a material of the thin metal layer portion, Au (gold) can be used, and the thin metal layer portion is formed on the Si thin film portion on the inner surface of the support substrate 2 by vapor deposition or sputtering or the like. However, the thin metal layer portion can be made of not only Au but also Pt (platinum) or the like. In this embodiment, the support substrate 2 and each of the piezoelectric elements 4 are pressed to each other while they are heated, so that metal (Au) atoms of the thin metal layer portion between them are diffused into the Si thin film portion on the inner surface of the support substrate 2 and into the piezoelectric element 4 (PZT). Thus, the support substrate 2 and each of the piezoelectric elements 4 are bonded securely in a diffused junction.

In the same way, the mirror substrate 3 is bonded onto each of the piezoelectric elements 4 via a thin metal layer portion (not shown) by the diffused junction. The thin metal layer portion is formed on the inner surface of the mirror substrate 3 by vapor deposition or sputtering or the like.

Thus, in the present embodiment, the Si thin film portion on the inner surface of the support substrate 2 is connected electrically to each of the piezoelectric elements 4 via the thin metal layer portion so as to be a separated electrode for applying an electric field to each of the piezoelectric elements 4. On the other hand, the mirror substrate 3 made of Si is connected electrically to each of the piezoelectric elements 4 via the thin metal layer portion so as to be a common electrode for applying an electric field to each of the piezoelectric elements 4.

Although the thin metal film portion is used as a type of adhesive for bonding the support substrate 2 and the piezoelectric element 4 to each other, and for bonding the mirror substrate 3 and the piezoelectric element 4 to each other by the diffused junction in the present embodiment, it is possible to use a conductive adhesive for bonding them. In addition, it is possible to use a nonconductive adhesive of epoxy system or the like for bonding them, but in this case, it is necessary to make electric connection between the Si wiring pattern from the Si thin film portion on the inner surface of the support substrate 2 and the piezoelectric element 4, and between the mirror substrate 3 made of Si and the piezoelectric element 4 by additional wire bonding or the like.

Although the mirror substrate 3 and the piezoelectric element 4 are bonded to each other in the present embodiment, it is possible to use a laminated piezoelectric element with electrodes drawn out from both sides can be used as the piezoelectric element 4, for example. In this case, if the Si thin film portion on the inner surface of the support substrate 2 is divided into two parts so that each of the Si thin film portions is connected to each electrode of the laminated piezoelectric element, an electric field can be applied to each of the piezoelectric elements 4. Therefore, it is sufficient to make a simple contact state between the mirror substrate 3 and the piezoelectric element 4 without bonding them to each other.

The support pillar 5 supports the mirror substrate 3. The support pillar 5 in the present embodiment is made of the same material as the piezoelectric element 4 and is bonded to the support substrate 2 and the mirror substrate 3 in the same manner as the above-mentioned piezoelectric element 4. Although the support pillar 5 is formed separately from the support substrate 2 in the present embodiment, it is possible to form it integrally with the support substrate 2.

As to the variable shape mirror 1 having the structure described above, the reflection plane of the mirror substrate 3 of the reflection film 6 is flat as shown in Fig. 1A, in the undriven state, i.e., the state where a voltage is not applied to each of the piezoelectric elements 4. On the other hand, when a predetermined voltage is applied to each of the piezoelectric elements 4 so that an electric field is applied for driving, each of the piezoelectric elements 4 is expanded between the support substrate 2 and the mirror substrate 3 as shown in Fig. 1B. In accordance with the expansion, the mirror substrate 3 is pressed upward so as to be deformed elastically in a convex shape, and the reflection plane of the reflection film 6 is deformed following the deformation of the mirror substrate 3. Therefore, use of this variable shape mirror 1 in the optical system of the optical pickup device enables correction of wave aberration in the laser beam.

Next, a manufacturing method for the above-mentioned variable shape mirror will be explained. First, as shown in Fig. 3A, the support substrate 2, the mirror substrate 3 (not shown in Fig. 3A), the piezoelectric elements 4, and the support pillars 5 that are individual elements of the variable shape mirror 1 are prepared. For example, the support substrate 2 and the mirror substrate 3 are cut out from each wafer and are prepared. In the present embodiment, the Si thin film portion, the Si wiring pattern and the thin metal layer portion that are described above as the structure of the variable shape mirror 1 are formed on a surface of the support substrate 2, while the thin metal layer portion is formed on a surface of the mirror substrate 3.

Further, a pair of jigs is prepared, which is used for assembling the structural components thereof. The jig is made up of a first jig 41 and a second jig 42. The first jig 41 includes a base portion 41a and a plurality of protruding bar portions 41b that protrude from the base portion 41a like comb teeth. In the same manner, the second jig 42 includes a base portion 42a and a plurality of protruding bar portions 41b that protrude from the base portion 42a. The first jig 41 and the second jig 42 are overlaid so that the protruding bar portions 41b and 42b are orthogonal to each other, so as to constitute the jig. Then, gaps between the protruding bar portions 41b of the first jig 41 and the gaps between the protruding bar portions 42b of the second jig 42 form through hole portions 43 that are arranged like a grid and pass through the first jig 41 and the second jig 42 (see Fig. 3B). In the present embodiment, positions of the through hole portions 43 correspond to the positions of the Si thin film portions (thin metal layer portions) formed on the support substrate 2, so that the support pillars 5 and the piezoelectric elements 4 are inserted in the through hole portion 43 corresponding to the position of the Si thin film portion for positioning.

Furthermore, in the present embodiment, as described above, the second jig 42 is overlaid on the first jig 41, and in this state the first jig 41 is overlaid on the support substrate 2. Therefore, the first jig 41 is provided with a protrusion 41c for positioning to the support substrate 2, which is formed in the L-shape from the base portion 41a along one of the protruding bar portions 41b on both ends. On the other hand, the second jig 42 is provided with a protrusion 42c for positioning to the first jig 41, which is formed in the L-shape from the base portion 42a along one of the protruding bar portions 42b on both ends. In addition, since the mirror substrate 3 is overlaid on the second jig 42, the second jig 42 is provided with a protrusion 42d for positioning to the mirror substrate 3, which is formed in the L-shape from the base portion 42a along one of the protruding bar portions 42b on both ends.

Furthermore, in the present embodiment, the first jig 41 and the second jig 42 are also used in the bonding step for the piezoelectric elements 4 and the support pillars 5, which will be performed later, and they are heated for the bonding step. Therefore, it is preferable that a material of the first jig 41 and a material of the second jig 42 have the same thermal expansion coefficient as a material of the support substrate 2, so that relative positions of the piezoelectric elements 4 and the support pillars 5 with respect to the support substrate 2 are not shifted due to the thermal expansion of the first jig 41 and the second jig 42 in the bonding step. However, the material may be a general stainless steel or the like if the thermal influence can be almost neglected.

Next, as shown in Fig. 3B, the second jig 42 is overlaid on the first jig 41. In this state, the protruding bar portion 41b of the first jig 41 and the protruding bar portion 42b of the second jig 42 are orthogonal to each other, and the first jig 41 and the second jig 42 are positioned to each other when the outer edge portion of the first jig 41 is restricted by the protrusion 42c of the second jig 42. After that, the first jig 41 is placed on the surface of the support substrate 2, on which the Si thin film portion and the like are formed. In this state, the support substrate 2 and the first jig 41 (including the second jig 42) are positioned to each other when the outer edge portion of the support substrate 2 is restricted by the protrusion 41c of the first jig 41. Thus, the through hole portions 43 are formed in a grid pattern with gaps between the protruding bar portions 41b of the first jig 41 and gaps between the protruding bar portions 42b of the second jig 42.

Next, as shown in Fig. 3C, the support pillars 5 and the piezoelectric elements 4 are inserted in the through hole portions 43 at the positions corresponding to the Si thin film portions formed on the support substrate 2. In this state, the support pillars 5 and the piezoelectric elements 4 are positioned with respect to the support substrate 2 with the protruding bar portion 41b of the first jig 41 and the protruding bar portion 42b of the second jig 42.

Next, as shown in Fig. 3D, the mirror substrate 3 is placed on the second jig 42, i.e., on the support pillars 5 and the piezoelectric elements 4 with the surface on which the thin metal layer portions are formed facing inward. In this state, the mirror substrate 3 and the second jig 42 (including the first jig 41, the support substrate 2, the support pillars 5 and the piezoelectric elements 4) are positioned to each other when the outer edge portion of the mirror substrate 3 is restricted by the protrusion 42d of the second jig 42. In this way, the support pillars 5 and the piezoelectric elements 4 are sandwiched easily between the support substrate 2 and the mirror substrate 3.

Next, the support substrate 2 and the support pillars 5, the support substrate 2 and the piezoelectric elements 4, the mirror substrate 3 and the support pillars 5, and the mirror substrate 3 and the piezoelectric elements 4 are bonded to each other, respectively. In the present embodiment, the support substrate 2 and the support pillars 5, the support substrate 2 and the piezoelectric elements 4, the mirror substrate 3 and the support pillars 5, and the mirror substrate 3 and the piezoelectric elements 4 are pressed to each other from the outer surface of the support substrate 2 and the outer surface of the mirror substrate 3 while they are heated, so that the support substrate 2 and the support pillars 5, the support substrate 2 and the piezoelectric elements 4, the mirror substrate 3 and the support pillars 5, and the mirror substrate 3 and the piezoelectric elements 4 are bonded to each other securely by the diffused junction.

After that, the second jig 42 is moved to slide and is drawn out in the direction opposite to the protruding direction of the protruding bar portion 42b. In the same manner, the first jig 41 is moved to slide and is drawn out in the direction opposite to the protruding direction of the protruding bar portion 41b.

Then, as shown in Fig. 3E, the reflection film 6 is formed on the outer surface of the mirror substrate 3. Thus, the variable shape mirror 1 is obtained. Although the formation of the reflection film 6 on the mirror substrate 3 is performed after the first jig 41 and the second jig 42 are drawn out in the present embodiment, it is possible to perform it before the first jig 41 and the second jig 42 are drawn out.

According to this manufacturing method, bonding of the piezoelectric elements 4 and the support pillars 5 to the support substrate 2 and the mirror substrate 3 is performed not separately but simultaneously, so the variable shape mirror 1 can be manufactured efficiently. Therefore, the manufacturing method of the present embodiment is sufficiently suitable for mass production.

The present invention is not limited to the embodiment described above but can be modified variously in the scope of the present invention as defined in the appended claims. For example, although the support substrate 2 and the mirror substrate 3 of a chip level cut out from a wafer when the individual variable shape mirrors 1 are manufactured in the above-mentioned embodiment, it is possible to make the portions to be individual variable shape mirrors 1 at the wafer stage and to divide the wafer after that so as to separate individual variable shape mirrors 1.

In this case, two wafers to be the support substrate 2 and the mirror substrate 3 are prepared, and the support pillars 5 and the piezoelectric elements 4 are sandwiched between the wafers in the areas to be individual variable shape mirrors 1. Then, the wafers and the support pillars 5, and the wafers and the piezoelectric elements 4 are bonded to each other, respectively. In this process, the first jig 41 and the second jig 42 having sizes that covers the entire wafer are used. Thus, a plurality of variable shape mirrors 1 are obtained at the same time, so manufacturing efficiency of the variable shape mirrors 1 is improved, and the method is superior in mass production.

The present invention is useful for manufacturing variable shape mirrors.

## Claims

1. A manufacturing method for variable shape mirrors, each of the variable shape mirrors comprising:
a support substrate (2);
a mirror substrate (3) that is opposed to the support substrate (2) and is supported by support pillars (5) and has a reflection film (6) on the surface; and
piezoelectric elements (4) that are sandwiched between the support substrate (2) and the mirror substrate (3) and are expanded or contracted when an electric field is applied so as to deform the mirror substrate (3) and the reflection film (6), and
the manufacturing method comprising:
an assembling step for placing the mirror substrate (3) on the support pillar (5) and the piezoelectric elements (4);
a bonding step for bonding at least the support substrate (2) and the support pillars (5), the support substrate (2) and the piezoelectric elements (4), and the mirror substrate (3) and the support pillars (5) to each other, respectively; and
a reflection film forming step for forming the reflection film (6) on the outer surface of the mirror substrate (3),
**characterized in that**
the assembling step includes overlaying a pair of jigs (41,42) having protruding bar portions (41b,42b) like comb teeth on the support substrate (2) so that the protruding bar portions (41b,42b) are orthogonal to each other, and inserting the support pillars (5) and the piezoelectric elements (4) into through hole portions (43) that are formed by gaps between the protruding bar portions (41b,42b), and
the method further comprises:
a jig draw out step for drawing out the jig in the direction opposite to the protruding direction of the protruding bar portion.

2. The manufacturing method for variable shape mirrors according to claim 1, **characterized in that** a thin metal layer is disposed at the bonding portion between the support substrate (2) and the support pillar (5), the bonding portion between the support substrate (2) and the piezoelectric element (4), the bonding portion between the mirror substrate (3) and the support pillar (5), and the bonding portion between the mirror substrate (3) and the piezoelectric element (4), and they are pressed to each other while they are heated to be bonded.

3. The manufacturing method for variable shape mirrors according to claim 2, **characterized in that** a thermal expansion coefficient of the jig is the same as that of the support substrate (2).

## Patentansprüche

1. Verfahren zur Herstellung von Spiegeln mit variabler Form, wobei jeder der Spiegel mit variabler Form Folgendes umfasst:
ein Trägersubstrat (2);
ein Spiegelsubstrat (3), das dem Trägersubstrat (2) gegenüberliegt und von Tragesäulen (5) gehalten wird und eine Reflexionsschicht (6) auf der Oberfläche aufweist; und
piezoelektrische Elemente (4), die zwischen dem Trägersubstrat (2) und dem Spiegelsubstrat (3) sandwichartig umschlossen sind und ausgedehnt oder zusammengezogen werden, wenn ein elektrisches Feld angelegt wird, um das Spiegelsubstrat (3) und die Reflexionsschicht (6) zu deformieren, und
wobei das Herstellungsverfahren Folgendes umfasst:
einen Montageschritt zum Platzieren des Spiegelsubstrats (3) auf der Tragesäule (5) und den piezoelektrischen Elementen (4); einen Bindungsschritt zum Verbinden von zumindest jeweils dem Trägersubstrat (2) und den Tragesäulen (5), dem Trägersubstrat (2) und der piezoelektrischen Elemente (4) und dem Spiegelsubstrat (3) und den Tragesäulen (5) miteinander, und
einen Reflexionsschicht-Ausbildungsschritt zum Ausbilden der Reflexionsschicht (6) auf der äußeren Oberfläche des Spiegelsubstrats (3),
**dadurch gekennzeichnet, dass**
der Montageschritt das Überlagern eines Paars von Spannvorrichtungen (41, 42) mit vorstehenden Stangenabschnitten (41b, 42b) wie Kammzinken auf dem Trägersubstrat (2), so dass die vorstehenden Stangenabschnitte (41b, 42b) zueinander senkrecht sind, und das Einfügen der Tragesäulen (5) und der piezoelektrischen Elemente (4) in Durchgangslochabschnitte (43), die von Lücken zwischen den vorstehenden Stangenabschnitten (41b, 42b) gebildet werden, beinhaltet, und
das Verfahren weiterhin Folgendes umfasst:
einen Spannvorrichtungs-Auszugsschritt zum Ausziehen der Spannvorrichtung in die Richtung, die der Vorstehrichtung des vorstehenden Stangenabschnitts entgegengesetzt ist.

2. Herstellungsverfahren für Spiegel mit variabler Form nach Anspruch 1, **dadurch gekennzeichnet, dass** eine dünne Metallschicht an dem Bindungsabschnitt zwischen dem Trägersubstrat (2) und der Tragesäule (5), dem Bindungsabschnitt zwischen dem Trägersubstrat (2) und dem piezoelektrischen Element (4), dem Bindungsabschnitt zwischen dem Spiegelsubstrat (3) und der Tragesäule (5) und dem Bindungsabschnitt zwischen dem Spiegelsubstrat (3) und dem piezoelektrischen Element (4) angeordnet ist und diese zusammengepresst werden, während sie zum Binden erwärmt werden.

3. Herstellungsverfahren für Spiegel mit variabler Form nach Anspruch 2, **dadurch gekennzeichnet, dass** der Wärmeausdehnungskoeffizient der Spannvorrichtung der gleiche wie derjenige des Trägersubstrats (2) ist.

## Revendications

1. Procédé de fabrication de miroirs de forme variable, chacun des miroirs de forme variable comprenant :
un substrat de support (2) ;
un substrat de miroir (3) qui est opposé au substrat de support (2) et est supporté par des colonnes de support (5) et possède un film de réflexion (6) à la surface ; et
des éléments piézoélectriques (4) qui sont pris en sandwich entre le substrat de support (2) et le substrat de miroir (3) et se dilatent ou se contractent quand un champ électrique est appliqué afin de déformer le substrat de miroir (3) et le film de réflexion (6), et le procédé de fabrication comprenant :
une étape d'assemblage permettant de placer le substrat de miroir (3) sur la colonne de support (5) et les éléments piézoélectriques (4) ;
une étape de liaison permettant de lier ensemble au moins le substrat de support (2) et les colonnes de support (5), le substrat de support (2) et les éléments piézoélectriques (4), et le substrat de miroir (3) et les colonnes de support (5), respectivement ; et
une étape de formation du film de réflexion permettant de former le film de réflexion (6) sur la surface extérieure du substrat de miroir (3),
**caractérisé en ce que**
l'étape d'assemblage inclut la superposition d'une paire de gabarits (41, 42) possédant des barres en saillie (41b, 42b) semblables à des dents de peigne sur le substrat de support (2) de manière à ce que les barres en saillie (41b, 42b) soient orthogonales les unes par rapport aux autres et inclut l'insertion des colonnes de support (5) et des éléments piézoélectriques (4) dans des trous débouchants (43) qui sont formés par des espaces entre barres en saillie (41b, 42b), et
le procédé comprend en outre :
une étape d'étirement de gabarit permettant d'étirer le gabarit dans la direction opposée à la direction de saillie de la barre en saillie.

2. Le procédé de fabrication de miroirs de forme variable selon la revendication 1, **caractérisé en ce qu'**une couche métallique mince est disposée au niveau de la partie de liaison entre le substrat de support (2) et la colonne de support (5), de la partie de liaison entre le substrat de support (2) et l'élément piézoélectrique (4), de la partie de liaison entre le substrat de miroir (3) et la colonne de support (5), et de la partie de liaison entre le substrat de miroir (3) et l'élément piézoélectrique (4), et elles sont pressées les unes avec les autres lorsqu'elles sont chauffées en vue d'être liées.

3. Le procédé de fabrication de miroirs de forme variable selon la revendication 2**, caractérisé en ce qu'**un coefficient de dilatation thermique du gabarit est le même que celui du substrat de support (2).
